# EUROPEAN PATENT SPECIFICATION

(11) **EP 4 067 782 B1**
(45) Date of publication and mention of the grant of the patent: **02.04.2025**
(21) Application number: 20894651.7
(22) Date of filing: 24.11.2020
(51) Int. Cl.: F25D 23/06

(54) **REFRIGERATING APPARATUS**
KÜHLGERÄT
APPAREIL DE REFRIGERATION

(30) Priority: 26.11.2019 CN 201911171335
(43) Date of publication of application: 05.10.2022
(73) Proprietor: QINGDAO HAIER REFRIGERATOR CO., LTD, Qingdao, Shandong 266101 (CN); HAIER SMART HOME CO., LTD., Qingdao, Shandong 266101 (CN)
(72) Inventor: LIU, Lei, Qingdao, Shandong 266101 (CN); LI, Guanlin, Qingdao, Shandong 266101 (CN); XU, Zhongge, Qingdao, Shandong 266101 (CN)
(74) Representative: Winter, Brandl - Partnerschaft mbB
(86) International application number: PCT/CN2020/131078
(87) International publication number: WO 2021/104243

(56) References cited:
- EP-A1- 3 330 650
- WO-A1-2010/137081
- CN-A- 1 401 962
- CN-A- 102 287 997
- CN-A- 102 901 303
- CN-A- 105 222 491
- CN-A- 106 382 779
- CN-A- 109 968 580
- CN-A- 109 968 580
- CN-A- 109 968 580
- CN-U- 202 885 416
- CN-U- 204 126 058
- CN-U- 211 372 889
- DE-A1- 19 728 648
- JP-A- 2002 054 787
- JP-A- 2011 089 670
- JP-A- 2014 134 020
- JP-A- H10 259 987
- JP-A- H11 132 646
- JP-U- H0 669 680
- KR-A- 20150 010 846
- US-A- 6 109 712
- US-A1- 2014 015 395

## Description

### TECHNICAL FIELD

The present invention relates to the field of refrigerating devices, and particularly relates to a refrigerating apparatus of which a heat preservation layer has a better filling effect.

### BACKGROUND

A refrigerator or a freezer, as a household appliance for freshness preservation, refrigeration or freezing of food, is owned by almost every household. A conventional refrigerator generally has a refrigerating compartment and a freezing compartment. In order to meet the heat preservation requirements for different temperatures in the two compartments and ensure that the two compartments are not influenced by the external ambient temperature, a heat preservation material is usually disposed in a cabinet of the refrigerator. The common setting is that a foaming material is filled between a housing and an inner liner of the refrigerator, and a heat preservation layer is formed after the foaming material is cured.

Documents CN 202 885 416 U, CN105222491A CN 109 968 580 A, JP 2014 134020 A, WO 2010/137081 A1, US 2014/015395 A1 and JP 2002 054787 A present heat preservation

Document EP3330650A1 discloses a refrigerating apparatus according to the preamble of claim 1. Documents KR20150010846A, US6109712A, CN204126058U and JPH0669680U disclose further relevant prior art.

It is well known that the heat preservation requirement of the refrigerating compartment is higher than that of the refrigerating compartment. In order to satisfy both of the heat preservation requirement and the requirement for a high capacity, the conventional refrigerator is provided that the refrigerating compartment is slightly larger than the freezing compartment, and that the thickness of the heat preservation layer around the refrigerating compartment is slightly smaller than that of the heat preservation layer around the freezing compartment. Currently, a one-shot filling for bottom steel is basically selected as the filling mode of the refrigerator, and there are problems that the refrigerating compartment is located above the freezing compartment and that a foaming space around the refrigerating compartment is narrow, which often lead to problems of nonuniform foaming density, foaming voids and the like. Since the two sides of the freezer are higher, sidewall foaming is problematic.

Therefore, it is necessary to provide a refrigerating apparatus that can solve the above problems.

### SUMMARY

The present invention provides a refrigerating apparatus with uniform foaming and an excellent heat preservation effect.

The present invention is disclosed in the independent claim 1. Further embodiments are disclosed in the dependent claims.

Compared with the prior art, the present invention has the following beneficial effects: the flow-limiting plate capable of limiting the flow direction of the filled foaming material is fixedly disposed between the housing and the inner liner of the cabinet to limit the positions where the foaming material is accumulated a lot, such that the foaming material can flow to the positions prone to foaming voids or nonuniform foaming, and the effect of uniform foaming can be achieved without changing the structure of the filling port. Therefore, the refrigerating apparatus provided by the present invention has a better heat preservation property.

### BRIEF DESCRIPTION OF THE DRAWINGS

FIG. 1 is a perspective view of a cabinet of a refrigerating apparatus according to an example.
FIG. 2 is another view of the cabinet shown in FIG. 1;
FIG. 3 is a partially exploded view of the cabinet shown in FIG. 1;
FIG. 4 is a top view of the cabinet shown in FIG. 1 and exploded along line A-A of FIG. 1;
FIG. 5 is a perspective view of a rear shell and a flow-limiting plate of the cabinet according to another preferred embodiment of the present invention;
FIG. 6 is a perspective exploded view of the rear shell and the flow-limiting plate shown in FIG. 5;
FIG. 7 is a perspective view of a fixture for fixing the flow-limiting plate in FIG. 5; and
FIG. 8 is another view of the fixture in FIG. 7.

### DETAILED DESCRIPTION

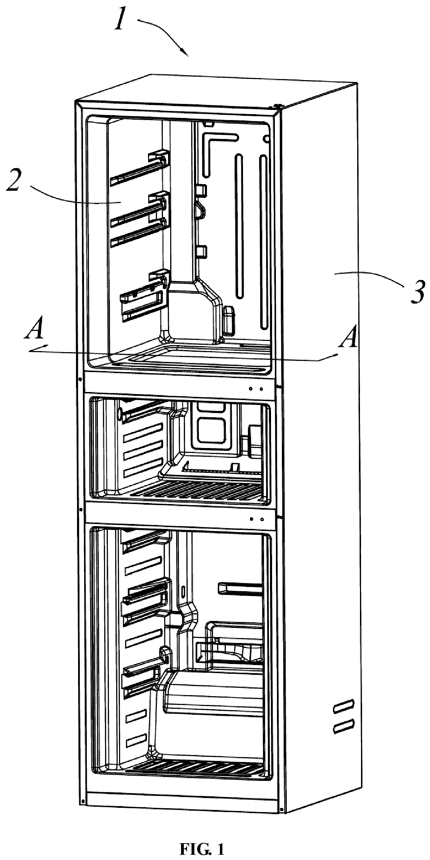

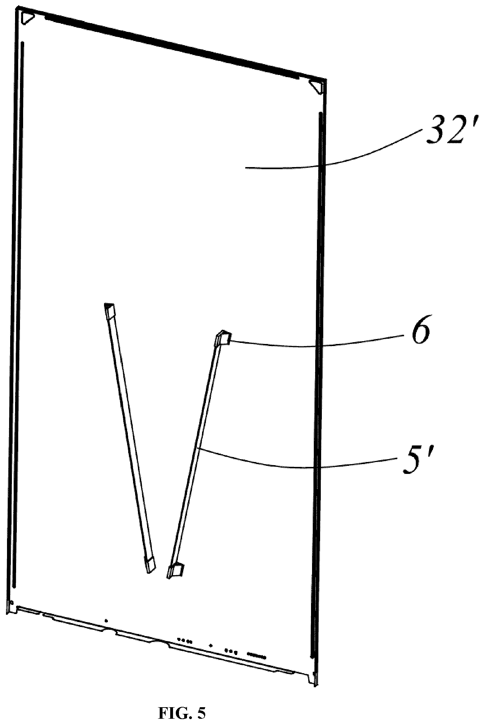

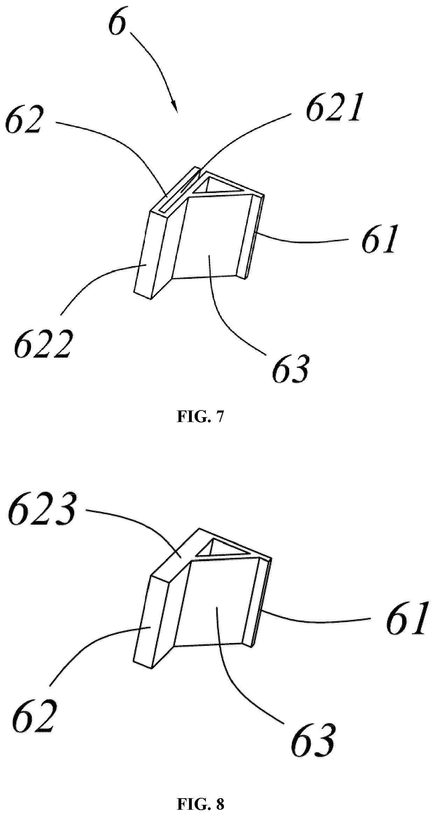

Figures 1-4 show an embodiment being useful for understanding the invention, which is outside the subject-matter of the claims. Figures 5-8 show an embodiment according to the present invention, which discloses a refrigerating apparatus according to claim 1. In order to make a person skilled in the art better understand the solutions of the present invention, the technical solutions in the embodiments will be clearly and completely described below with reference to the accompanying drawings.

The present invention relates to a refrigerating apparatus. As shown in FIG. 1, a detailed explanation is mainly made by taking a refrigerator as an example. Certainly, the refrigerating apparatus may be a freezer or the like.

Referring to FIGs. 1 to 4, the refrigerating apparatus includes a cabinet 1, wherein the cabinet 1 is provided with an inner liner 2 and a housing 3 between which a foaming cavity 4 is formed. A heat preservation layer (not shown) is usually formed by filling the foaming cavity 4 with a foaming material. The cabinet 1 is further provided with a flow-limiting plate 5 fixedly disposed between the housing 3 and the inn container 2 to limit the flow direction of the filled foaming material.

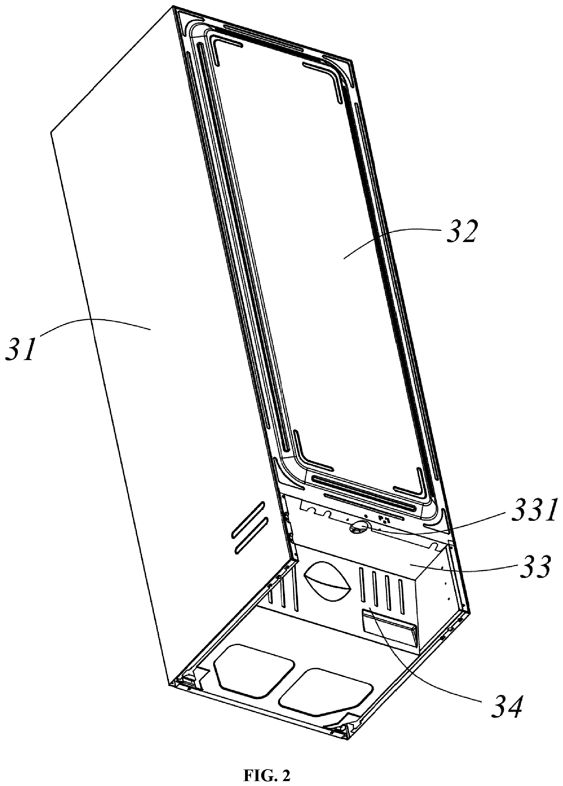

Specifically, as shown in FIGs. 1 and 2, the inner liner 2 of the cabinet 1 is provided with a refrigerating inner liner 21 and a freezing inner liner 22 located below the refrigerating inner liner 21. In this embodiment, the inner liner 2 is further provided with a temperature-changing chamber inner liner 23 located between the refrigerating inner liner 21 and the freezing inner liner 22.

The housing 3 is provided with a U-shell 31 covering two sides and the top of the inner liner 2, a rear shell 32 covering the rear side of the inner liner 2, and bottom steel 33 connected between the rear shell 32 and the lower side of the U-shell 31. The bottom steel 33 is Z-shaped so that a compressor chamber 34 for receiving a compressor (not shown) is also formed below the bottom steel 33 and between the U-shell 31 and the rear shell 32.

The foaming cavity 4 is formed among the refrigerating inner liner 21, the freezing inner liner 22, the temperature-changing chamber inner liner 23, the U-shell 31, the rear shell 32 and the bottom steel 33, and is designed to be through from bottom to top. The depth of the foaming cavity 4 around the freezing inner liner 22 in the direction perpendicular to the housing 3 is greater than the depth of the foaming cavity 4 around the refrigerating inner liner 21 in the direction perpendicular to the housing 3.

A filling port 331 communicated with the foaming cavity 4 is formed at the bottom of the housing 3, i.e., on the bottom steel 33 in this embodiment.

The flow-limiting plate 5 is selectively secured to the inner liner 2 or the housing 3 according to the placement condition of the cabinet 1 in a foaming mould (not shown), and in order to avoid a heat bridge effect and ensure sufficient filling of the foaming material on the side of the flow-limiting plate 5 distal from the filling port 331, two ends of the flow-limiting plate 5 in the direction perpendicular to the housing 3 will not be simultaneously in contact with the inner liner 2 and the housing 3, i.e., the width of the flow-limiting plate 5 is smaller than the distance between the inner liner 2 and the housing 3 in the direction perpendicular to the housing 3.

The foaming of the cabinet 1 is executed after the rear shell 32 is placed downward, so that the flow-limiting plate 5 is fixedly disposed on the housing 3, specifically on the rear shell 32. The flow-limiting plate 5 is provided with a flow-limiting portion 51 perpendicular to the rear shell 32, and a gap is formed between the flow-limiting portion 51 and the inner liner 2.

Preferably, the width of the flow-limiting portion 51 in the direction perpendicular to the rear shell 32 is not more than half of the distance between the rear shell 32 and the inner liner 2 in the position where the flow-limiting portion 51 is located, so that the foaming material can flow in a conventional direction and can be partially limited. Therefore, the flow direction of the foaming material injected into the foaming cavity 4 through the filling port 331 is limited, and the foaming material is prevented from excessively moving toward the top wall of the cabinet 1 after the foaming material enters from the filling port 331.

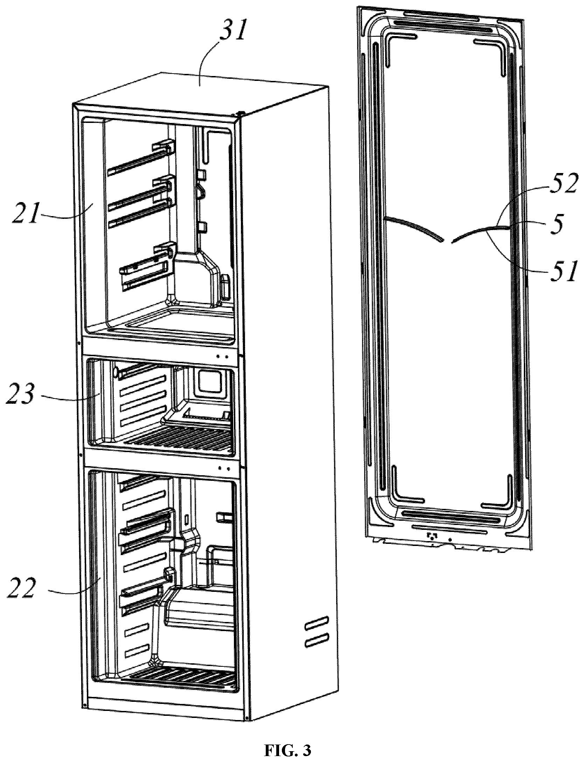

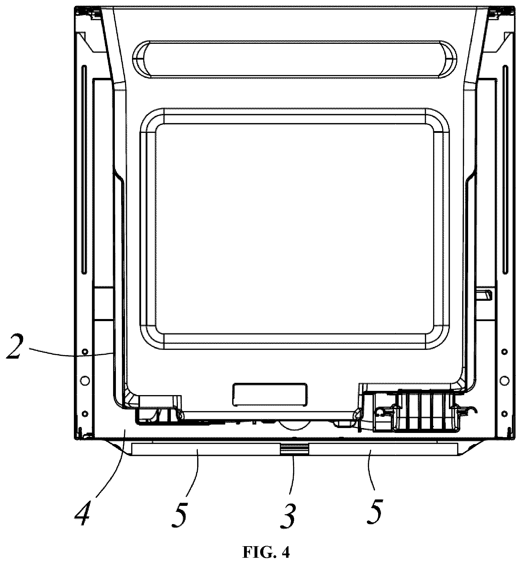

As shown in FIGs. 3 and 4, the number of the flow-limiting plates 5 is two, and the two flow-limiting plates are located on the lower side behind the refrigerating inner liner 21, and extend in an arc shape from the middle to two sides. A motion space for the foaming material to move in the direction of the flow-limiting plate 5 distal from the filling port 331 is formed between the two flow-limiting plates 5 and between the flow-limiting plate 5 and the inner liner 2. The flow-limiting plate 5 can limit the flow rate of the foaming material moving in the direction distal from the filling port 331, and meanwhile, guide the foaming material to the inside of the foaming cavity 4 on two sides of the inner liner 2.

Since the distance between the refrigerating inner liner 21 and the housing 3 is relatively small, on the one hand, the foaming material can be prevented from moving linearly and excessively flowing to the top of the cabinet 1 when a foaming gun performs foaming from the filling port 331, such that the foaming cavity 4 behind the refrigerating inner liner 22 demanding a great amount of the foaming material is sufficiently filled. On the other hand, the foaming cavity that is harder to fill on the two sides of the refrigerating inner liner 21 can be fully filled with the foaming material through a smaller gap, such that foaming voids or nonuniform foaming is avoided. Further, the refrigerating apparatus has the better heat preservation property.

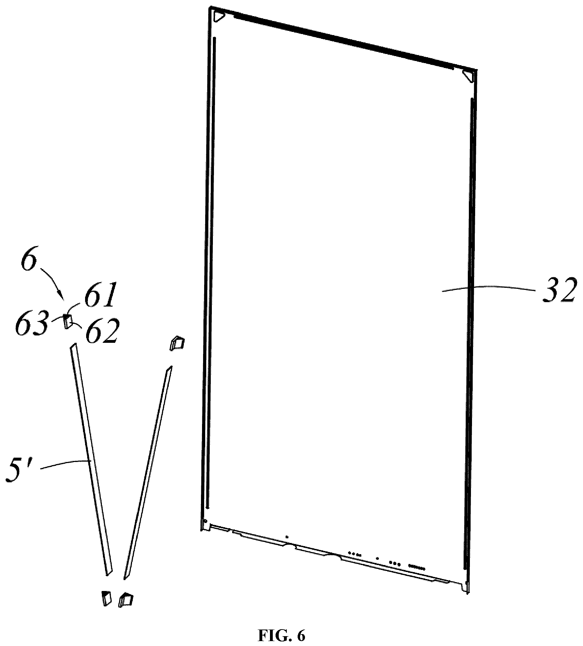

In another preferred embodiment of the present invention, which discloses a refrigerating apparatus according to claim 1, referring to FIGs. 5 and 6, two flow-limiting plates 5' are also provided, but the extending modes of the flow-limiting plates 5' differ from the extending mode in the previous embodiment in that the flow-limiting plates 5' extend obliquely from bottom to top and from inside to outside. The distance between the lower ends of the two flow-limiting plates 5' in the height direction of the rear shell 32' is smaller than the distance between the upper ends of the flow-limiting plates 5', such that the two flow-limiting plates 5' are substantially disposed in an inverted splayed shape with an upward opening.

In addition, in the embodiment, the two flow-limiting plates 5' are simultaneously arranged close to the filling port 331, such that the flow direction of the foaming material injected from the filling port 331 can be limited as soon as possible to facilitate rapid filling of the foaming material in each position of the foaming cavity. Therefore, the filling efficiency and the filling effect are improved.

Based on the symmetrical arrangement of the conventional refrigerating apparatus in the width direction, in the preferred embodiment of the present invention, the motion space for the foaming material to pass through between the two flow-limiting plates 5, 5' is aligned with the filling port 331. Certainly, when an air passage and other structures are disposed between the inner liner 2 and the housing 3 to cause the foaming cavity 4 to be asymmetrical in structure, the arrangement of the flow-limiting plates 5, 5' may also be correspondingly adjusted.

As stated above, according to the present invention, the flow-limiting plate 5, 5' are fixedly disposed on the housing 3. As shown in FIG. 3. the flow-limiting plate 5 is integrated with a fixing portion 52 connected to the flow-limiting portion 51, and the fixing portion 52 is perpendicularly connected to the flow-limiting portion 51, and secured to the rear shell 32 by bonding.

According to the present invention, as shown in FIGs. 5 to 8, the housing 1 is further provided with a fixture 6 by which the flow-limiting plate 5' is fixedly connected to the housing 3 or the inner liner 2.

The fixture 6 is provided with a fixing portion 61 secured to the rear shell 32 in a bonded manner, and a mounting portion 62 perpendicularly connected to the fixing portion 61, and the mounting portion 62 is provided with a mounting groove 621 matched with an end portion of the flow-limiting plate 5'.

The mounting portion 62 is provided with a limiting wall 622 that limits the movement of the flow-limiting plate 5' towards the inner liner 2, and a blocking wall 623 that limits the movement of the flow-limiting plate 5' in its length direction. In order to enhance the strength of the fixture 6, the fixture 6 is further provided with a reinforcing portion 63, which extends obliquely and is connected between the fixing portion 61 and the mounting portion 62.

Further, the flow-limiting plates 5, 5' in the present invention are made from a material having a melting point higher than the melting point of the foaming material, avoiding loss of a flow-limiting function due to direct melting at an excessively high temperature during filling of the foaming material. Certainly, the flow-limiting plates 5, 5' may also be made from a material having a melting point approximate to the melting point of the foaming material, such that the flow-limiting plates can be melted into the foaming material after flow limiting is achieved, further reducing the risk of a heat bridge effect.

In summary, in the present invention, the flow-limiting plates 5, 5' capable of limiting the flow direction of the filled foaming material are fixedly disposed in the foaming cavity 4 to limit the positions where the foaming material is accumulated a lot, such that the foaming material can flow to the positions prone to foaming voids or nonuniform foaming, and the effect of uniform foaming can be achieved without changing the structure of the filling port 331. Further, the refrigerating apparatus provided by the present invention has the better heat preservation property.

The above detailed description only aims to specifically illustrate the available embodiments of the present invention, and is not intended to limit the protection scope of the present invention, which is defined by the following claims.

## Claims

1. A refrigerating apparatus, comprising a cabinet (1), wherein the cabinet (1) is provided with an inner liner (21) and a housing (3) between which a foaming cavity (4) is formed; a heat preservation layer is formed by filling the foaming cavity (4) with a foaming material; the cabinet (1) is further provided with a flow-limiting plate (5') that is fixedly disposed between the housing (3) and the inner liner (21) to limit a flow direction of the filled foaming material; and a width of the flow-limiting plate (5') is smaller than a distance between the inner liner (21) and the housing (3) in a direction perpendicular to the housing (3);
wherein the flow-limiting plate (5') is fixedly disposed on the housing (3) and has a flow-limiting portion (51) perpendicular to the housing (3), and a gap is formed between the flow-limiting portion (51) and the inner liner (21); wherein the housing (3) is provided with a rear shell (32); the flow-limiting plate (5') is fixedly disposed on the rear shell (32); and a width of the flow-limiting portion (51) in a direction perpendicular to the rear shell (32) is not more than half of a distance between the rear shell (32) and the inner liner (21) in a position where the flow-limiting portion (51) is located;
wherein the inner liner (21) is provided with a refrigerating inner liner (21) and a freezing inner liner (21), wherein a filling port (331) communicated with the foaming cavity (4) is disposed at a bottom of the housing (3); the number of the flow-limiting plates (5') is two, and the two flow-limiting plates (5') obliquely extend from inside to outside and from bottom to top in an inverted splayed shape respectively; and lower ends of the flow-limiting plates (5') are disposed close to the filling port (331),
**characterized in that** the freezing inner liner is located below the refrigerating inner liner, wherein
the cabinet (1) is further provided with a fixture (6) by which each flow-limiting plate (5') and the housing (3) or the inner liner (21) are fixedly connected; wherein the fixture (6) is provided with a fixing portion (61) secured to the rear shell (32) in a bonded manner, and a mounting portion (62) perpendicularly connected to the fixing portion (61); and wherein the mounting portion (62) is provided with a mounting groove (621) matched with an end portion of each flow-limiting plate (5'); wherein the mounting portion (62) is provided with a limiting wall (622) that limits movement of each flow-limiting plate (5') towards the inner liner (21) and a blocking wall (623) that limits the movement of each flow-limiting plate (5' ) in its length direction.

2. The refrigerating apparatus according to claim 1, wherein the fixture (6) is further provided with a reinforcing portion (63), and the reinforcing portion (63) extends obliquely and is connected between the fixing portion (61) and the mounting portion (62).

3. The refrigerating apparatus according to claim 1, wherein the flow-limiting plate (5') is made from a material having a melting point higher than a melting point of the foaming material.

## Patentansprüche

1. Kühlvorrichtung, aufweisend einen Schrank (1), wobei der Schrank (1) mit einer Innenauskleidung (21) und einem Gehäuse (3) versehen ist, zwischen denen ein Schäumhohlraum (4) gebildet ist; eine Wärmekonservierungsschicht durch Füllen des Schäumhohlraums (4) mit einem Schäummaterial gebildet ist; der Schrank (1) ferner mit einer Strömungsbegrenzungsplatte (5') versehen ist, die fest zwischen dem Gehäuse (3) und der Innenauskleidung (21) angeordnet ist, um eine Strömungsrichtung des gefüllten Schäummaterials zu begrenzen; und eine Breite der Strömungsbegrenzungsplatte (5') kleiner als ein Abstand zwischen der Innenauskleidung (21) und dem Gehäuse (3) in einer Richtung senkrecht zu dem Gehäuse (3) ist;
wobei die Strömungsbegrenzungsplatte (5') fest an dem Gehäuse (3) angeordnet ist und einen Strömungsbegrenzungsabschnitt (51) senkrecht zu dem Gehäuse (3) aufweist, und ein Spalt zwischen dem Strömungsbegrenzungsabschnitt (51) und der Innenauskleidung (21) gebildet ist; wobei das Gehäuse (3) mit einer hinteren Schale (32) versehen ist; die Strömungsbegrenzungsplatte (5') fest an der hinteren Schale (32) angeordnet ist; und eine Breite des Strömungsbegrenzungsabschnitts (51) in einer Richtung senkrecht zu der hinteren Schale (32) nicht mehr als die Hälfte eines Abstands zwischen der hinteren Schale (32) und der Innenauskleidung (21) in einer Position ist, in der der Strömungsbegrenzungsabschnitt (51) angeordnet ist;
wobei die Innenauskleidung (21) mit einer Kühl-Innenauskleidung (21) und einer Gefrier-Innenauskleidung (21) versehen ist, wobei eine Füllöffnung (331), die mit dem Schäumhohlraum (4) in Verbindung steht, an einem Boden des Gehäuses (3) angeordnet ist; die Anzahl der Strömungsbegrenzungsplatten (5') zwei ist, und die zwei Strömungsbegrenzungsplatten (5') sich jeweils schräg von innen nach außen und von unten nach oben in einer umgekehrten gespreizten Form erstrecken; und untere Enden der Strömungsbegrenzungsplatten (5') nahe der Füllöffnung (331) angeordnet sind,
**dadurch gekennzeichnet, dass** die Gefrier-Innenauskleidung unter der Kühl-Innenauskleidung angeordnet ist, wobei
der Schrank (1) ferner mit einer Halterung (6) versehen ist, durch die jede Strömungsbegrenzungsplatte (5') und das Gehäuse (3) oder die Innenauskleidung (21) fest verbunden sind; wobei die Halterung (6) mit einem Befestigungsabschnitt (61), der an der hinteren Schale (32) in einer verbundenen Weise befestigt ist, und einem Montageabschnitt (62) versehen ist, der senkrecht mit dem Befestigungsabschnitt (61) verbunden ist; und wobei der Montageabschnitt (62) mit einer Montagenut (621) versehen ist, die mit einem Endabschnitt jeder Strömungsbegrenzungsplatte (5') zusammenpasst; wobei der Montageabschnitt (62) mit einer Begrenzungswand (622), die eine Bewegung jeder Strömungsbegrenzungsplatte (5') in Richtung der Innenauskleidung (21) begrenzt, und einer Blockierwand (623) versehen ist, die die Bewegung jeder Strömungsbegrenzungsplatte (5') in ihrer Längsrichtung begrenzt.

2. Kühlvorrichtung nach Anspruch 1, wobei die Halterung (6) ferner mit einem Verstärkungsabschnitt (63) versehen ist, und der Verstärkungsabschnitt (63) sich schräg erstreckt und mit dem Befestigungsabschnitt (61) und dem Montageabschnitt (62) verbunden ist.

3. Kühlvorrichtung nach Anspruch 1, wobei die Strömungsbegrenzungsplatte (5') aus einem Material hergestellt ist, das einen Schmelzpunkt aufweist, der höher als ein Schmelzpunkt des Schäummaterials ist.

## Revendications

1. Appareil de réfrigération comprenant une enceinte (1), dans lequel l'enceinte (1) est pourvue d'une doublure interne (21) et d'un boîtier (3) entre lesquels une cavité de moussage (4) est formée ; une couche de conservation de chaleur est formée en versant dans la cavité de moussage (4) un matériau moussant ; l'enceinte (1) est en outre pourvue d'une plaque de limitation d'écoulement (5') qui est disposée de manière fixe entre le boîtier (3) et la doublure interne (21) pour limiter une direction d'écoulement du matériau moussant versé ; et une largeur de la plaque de limitation d'écoulement (5') est plus petite qu'une distance entre la doublure interne (21) et le boîtier (3) dans une direction perpendiculaire au boîtier (3) ;
dans lequel la plaque de limitation d'écoulement (5') est disposée de manière fixe sur le boîtier (3) et présente une partie de limitation d'écoulement (51) perpendiculaire au boîtier (3), et un espace est formé entre la partie de limitation d'écoulement (51) et la doublure interne (21) ; dans lequel le boîtier (3) est pourvu d'une coque arrière (32) ; la plaque de limitation d'écoulement (5') est disposée de manière fixe sur la coque arrière (32) ; et une largeur de la partie de limitation d'écoulement (51) dans une direction perpendiculaire à la coque arrière (32) est inférieure ou égale à la moitié d'une distance entre la coque arrière (32) et la doublure interne (21) dans une position où la partie de limitation d'écoulement (51) est située ;
dans lequel la doublure interne (21) est pourvue d'une doublure interne de réfrigération (21) et d'une doublure interne de congélation (21), dans lequel un orifice de versement (331) en communication avec la cavité de moussage (4) est disposé au niveau d'un fond du boîtier (3) ; le nombre de plaques de limitation d'écoulement (5') est deux et les deux plaques de limitation d'écoulement (5') s'étendent respectivement obliquement de l'intérieur vers l'extérieur et de bas en haut dans une forme évasée inversée ; et les extrémités inférieures des plaques de limitation d'écoulement (5') sont disposées à proximité de l'orifice de versement (331),
**caractérisé en ce que** la doublure interne de congélation est située en-dessous de la doublure interne de réfrigération, dans lequel
l'enceinte (1) est en outre pourvue d'un dispositif de fixation (6) au moyen duquel chaque plaque de limitation d'écoulement (5') et le boîtier (3) ou la doublure interne (21) sont reliés de manière fixe ; dans lequel le dispositif de fixation (6) est pourvu d'une partie de fixation (61) fixée à la coque arrière (32) de manière collée, et d'une partie de montage (62) reliée perpendiculairement à la partie de fixation (61) ; et dans lequel la partie de montage (62) est pourvue d'une rainure de montage (621) correspondant à une partie d'extrémité de chaque plaque de limitation d'écoulement (5') ; dans lequel la partie de montage (62) est pourvue d'une paroi de limitation (622) qui limite le déplacement de chaque plaque de limitation d'écoulement (5') vers la doublure interne (21), et d'une paroi de blocage (623) qui limite le déplacement de chaque plaque de limitation d'écoulement (5') dans sa direction longitudinale.

2. Appareil de réfrigération selon la revendication 1, dans lequel le dispositif de fixation (6) est en outre pourvu d'une partie de renfort (63), et la partie de renfort (63) s'étend obliquement et est reliée entre la partie de fixation (61) et la partie de montage (62).

3. Appareil de réfrigération selon la revendication 1, dans lequel la plaque de limitation d'écoulement (5') est constituée d'un matériau présentant un point de fusion plus élevé que le point de fusion du matériau moussant.
